# EUROPÄISCHE PATENTANMELDUNG

(11) **EP 1 717 068 A2**
(43) Veröffentlichungstag der Anmeldung: **02.11.2006**
(21) Anmeldenummer: 06014504.2
(22) Anmeldetag: 22.06.2001
(51) Int. Cl.: B60D 1/62, B60L 15/32

(54) **Verfahren zum Datenaustausch zwischen Zugfahrzeug und Anhänger**

(30) Priorität: 06.09.2000 DE 10044034
(62) Teilanmeldung aus: 01114727.9
(71) Anmelder: WABCO GmbH & Co. OHG, 30432 Hannover (DE)
(72) Erfinder: Dieckmann, Thomas, 30982 Pattensen (DE); Michaelsen, Arne, Dr., 30167 Hannover (DE)
(74) Vertreter: Schrödter, Manfred

(57) **Zusammenfassung**

Es wird ein Verfahren zum Datenaustausch zwischen einem Zugfahrzeug (1) und einem oder mehreren Anhängern (2), insbesondere für Nutzfahrzeuge, vorgeschlagen. Dabei funktioniert das Verfahren durch Funkkontakt über in dem Zugfahrzeug (1) und in den Anhängern (2) enthaltene Sende-/Empfangsmodule (5, 6). Zur Erkennung der Zusammengehörigkeit von Zugfahrzeug (1) und Anhänger (2) sendet das Sende-/Empfangsmodul (5) des Zugfahrzeuges (1) über eine Antenne (7) eine Kennung und ändert gleichzeitig den elektrischen Zustand einer Verbindungsleitung (10). Falls das im Anhänger (2) befindliche Sende-/Empfangsmodul (6) gleichzeitig mit der empfangenen Kennung die Änderung des elektrischen Zustands der Verbindungsleitung (10) erkennt, wird die empfangene Kennung abgespeichert. Bei späteren Sendungen der Sende-/Empfangsmodule (5, 6) wird die Kennung jeweils vorgeschaltet. Es reagieren dann nur noch diejenigen Sende-/Empfangsmodule (5, 6), welche die gleiche Kennung aufweisen, also zum gleichen Fahrzeugzug gehören.

## Beschreibung

Die Erfindung bezieht sich auf ein Verfahren zum Datenaustausch zwischen einem Zugfahrzeug und einem oder mehreren Anhängern, insbesondere für Nutzfahrzeuge, gemäß dem Oberbegriff der Patentansprüche 1 und 2.

Ein derartiges Verfahren ist beispielsweise bekannt aus der US-PS 5,142,278. Diese Schrift beschreibt ein Zugfahrzeug mit zwei Anhängern, welche über eine Elektro-Versorgungsleitung verbunden sind. Zur Übermittlung von Daten zwischen Zugfahrzeug und Anhängern werden diese auf die Versorgungsleitung aufmoduliert. Als Daten kommen'beispielsweise Identifizierungssignale der Anhänger, als auch Temperaturwerte und Druckwerte in den Anhängern in Frage. Die so im Zugfahrzeug zur Verfügung stehenden Daten werden von dort über eine Funkverbindung an eine Zentrale weitergesendet. Diese kann somit den Standort der Fahrzeuge sowie die weiteren Daten kontrollieren. Es besteht keine Funkverbindung zwischen dem Zugfahrzeug und den Anhängern.

Es ist weiter aus der EP 0 793 838 B1 ein Verkehrsüberwachungssystem für Transportsysteme bekannt, wobei in der schleppenden Einheit eine Datenverarbeitungseinheit angeordnet ist, und in der geschleppten Einheit eine weitere Datenverarbeitungseinheit angeordnet ist. Die beiden genannten Einheiten können über eine drahtlose Übertragung Informationen austauschen. Das bekannte System dient vor allem dem Diebstahlschutz.

Schließlich ist aus der EP-A1 1 013 533 ein Verfahren zum Bestimmen der physischen Reihenfolge von Fahrzeugen eines zusammengestellten Zuges und einer Anordnung zur Durchführung des Verfahrens (Zugtaufe) bekannt. Dabei werden von fahrzeugfesten Funkeinrichtungen auf Anforderungen eines Zugmasters Informationen in ein Zug gebundenes funkbasiertes Datenkommunikationssystem gesendet. Zur Identifizierung der Wagen eines gemeinsamen Zuges wird über die Hauptluftleitung ein codiertes Identifikationssignal zu den Wagen geleitet.

Das erfindungsgemäße Verfahren dient insbesondere zum Austausch von Daten und Befehlen zwischen elektrischen Bremssystemen (EBS) in Motorwagen und Anhängern eines Straßen-Nutzfahrzeuges. Ein derartiger Datenaustausch wirkt sich positiv auf das Bremsverhalten und die Stabilität des Fahrzeug-Zuges aus.

Anhänger- und Motorwagen-EBS sind im allgemeinen für einen Stand-Alone-Betrieb ausgelegt. Demgegenüber ist aber eine Zusammenarbeit beider Systeme wünschenswert. Hiermit könnte beispielsweise eine im EBS enthaltene Fahrdynamikregelung (FDR) Daten zwischen Anhänger und Motorwagen austauschen und beispielsweise einzelne Räder des Anhängers bei Bedarf abbremsen.

Für einen derartigen (leitungsgebundenen) Datenaustausch existiert bereits eine genormte Schnittstelle nach ISO 11992. Der Datenaustausch erfolgt dabei über eine elektrische Verbindungsleitung (CAN-Bus). Eine Identifizierung zur Erkennung der Zusammengehörigkeit von Zugfahrzeug und Anhänger ist dabei nicht notwendig. Die genannte Schnittstelle ist allerdings in der Praxis wenig verbreitet und kann deshalb nicht vorausgesetzt werden. Auch eine denkbare EBS-eigene Verbindungsleitung mit einem Datenkabel wäre nicht praxisgerecht.

Denkbar ist, daß künftig eine Datenübertragung, beispielsweise für den o. g. Zweck, zwischen Zugfahrzeug und einem oder mehreren Anhängern über eine Funkverbindung realisiert wird. Dabei enthalten sowohl das Zugfahrzeug als auch der oder die Anhänger jeweils ein Sende-/Empfangsmodul, durch welche die genannten Daten in beliebiger Richtung gesendet und empfangen werden können. Eine derartige Funkverbindung würde mit einer geringen Reichweite (unter 100 m) auskommen. Es tritt dabei jedoch das Problem auf, daß auf ein beispielsweise vom Zugfahrzeug ausgesendetes Funksignal nur die an dieses angekoppelten Anhänger reagieren dürfen, nicht aber weitere, ebenfalls in der Nähe des Zugfahrzeugs befindliche fremde Anhänger oder andere Zugfahrzeuge.

Der Erfindung liegt deshalb die Aufgabe zugrunde, bei der o. g. Funkübertragung eine sichere Identifizierung zusammenhängender Zugfahrzeuge/Anhänger zu ermöglichen, damit eine Funkbotschaft nur vom zugehörigen, angekoppelten Anhänger/Zugfahrzeug erkannt und ausgeführt wird.

Diese Aufgabe wird durch die in den Patentansprüchen 1 und 2 angegebene Erfindung gelöst. Die Unteransprüche enthalten zweckmäßige Weiterbildungen.

Die Erfindung wird im folgenden anhand einer Zeichnung näher erläutert. Diese zeigt in schematischer Darstellung ein Zugfahrzeug mit angekoppeltem Anhänger.

Das Zugfahrzeug (1) ist an den Anhänger (2) mittels einer Deichsel (14) angekoppelt. Natürlich können an das Zugfahrzeug (1) auch mehrere Anhänger angekoppelt sein.

Vom Zugfahrzeug (1) zum Anhänger (2) führt eine elektrische Verbindungsleitung (10), welche als (mehradrige) Bremslicht-/Blinklichtleitung ausgeführt ist. Zwischen den einzelnen Fahrzeugeinheiten wird die Verbindungsleitung (10) über Steckdosen (11) sowie flexible Kabel (17) geführt. An die Verbindungsleitung (10) sind Bremslicht-/Blinklichteinheiten (12, 13) angeschlossen.

Sowohl das Zugfahrzeug (1) als auch der Anhänger (2) weisen je eine Elektronik, beispielsweise ein elektronisches Bremssystem (EBS) (3, 4) auf. Derartige elektronische Bremssteuerungen dienen in bekannter Weise zum Ansteuern der Radbremsen in Abhängigkeit von der Bremsbetätigung des Fahrers sowie weiterer Parameter. In den EBS-Elektroniken ist meist in bekannter Weise ein ABS (Antiblockiersystem) sowie ein ASR (automatische Schlupfregelung) integriert. Anstelle der EBS-Elektroniken können auch andere Elektroniken eingesetzt werden, z. B. Fahrdynamik-Regelungen (FDR).

Die Elektroniken (3) und (4) sind über Leitungen (15, 16) an die Verbindungsleitung (10) angeschlossen.

Weiter ist im Zugfahrzeug (1) sowie im Anhänger (2) je ein Sende-/Empfangsmodul (5, 6) vorgesehen. Die genannten Module (5, 6) sind mit je einer Antenne (7, 8) verbunden. Zum Datenaustausch besteht eine elektrische Verbindung zwischen den Modulen (5, 6) und den Elektroniken (3, 4).

Die Elektroniken (3, 4) und die Sende-/Empfangsmodule (5, 6) sind an einer beliebigen, geeigneten Stelle in den Fahrzeugen (1, 2) eingebaut, und wurden in geeigneter Weise mit einer Betriebsspannung versorgt.

Das erfindungsgemäße Verfahren zum Datenaustausch zwischen dem Zugfahrzeug (1) und dem Anhänger (2) (in beliebiger Richtung) funktioniert wie folgt.

Es wird zunächst das Verfahren gemäß Patentanspruch 1 beschrieben.

Es sei angenommen, daß das Zugfahrzeug (1) mit angekoppeltem Anhänger (2) zunächst auf einem Speditionshof abgestellt ist. Sobald ein Fahrer das Fahrzeug durch Einschalten der Zündung in Betrieb nimmt, gibt die Elektronik (3) (oder das Modul (5)) über die Leitung (15) ein kurzes Signal auf die Verbindungsleitung (10).

Durch dieses Signal wird der aktuelle Spannungszustand auf der Verbindungsleitung (10) kurzzeitig verändert, also von Null auf Betriebsspannung (u) oder von u auf Null geschaltet. Das Signal kann dabei auf die in der (mehradrigen) Verbindungsleitung (10) enthaltene Bremslichtleitung oder auf die Blinklichtleitung gegeben werden. Hierdurch werden die aktuell anstehenden Signale für die Bremslichter und/oder die Fahrtrichtungsanzeige (12, 13) kurzzeitig geändert. Vorteilhaft sind diese Änderungen so kurz, daß sie von außen nicht sichtbar sind. Dies bedeutet, daß durch die obengenannten Impulse kein Flackern der Bremslichter oder Blinklichter erzeugt wird.

Das obengenannte Signal kann auch auf eine andere, üblicherweise vorhandene Verbindungsleitung, beispielsweise eine Pneumatikleitung gegeben werden.

Gleichzeitig mit dem Signal auf die Verbindungsleitung (10) veranlaßt die EBS-Elektronik (3), daß das Sende-/Empfangsmodul (5) des Zugfahrzeugs über seine Antenne (7) ein Funksignal mit seiner Kennung zum Anhänger (2) sendet. Als Kennung kann vorteilhaft ein charakteristisches Merkmal der sendenden Elektronik (3), beispielsweise deren Seriennummer, benutzt werden. Als Sendefrequenz für die Sende-/Empfangsmodule (5, 6) kann die für Türschließsysteme freigegebene Frequenz verwendet werden.

Die EBS-Elektronik (4) im Anhänger enthält eine Einrichtung, mit welcher über die Leitung (16) die oben beschriebene Aktivierung/Deaktivierung der Verbindungsleitung (10) erkannt werden kann. Dies erfolgt durch eine entsprechende Programmierung des enthaltenen Microcontrollers (µC). Falls die Elektronik (4) über die Antenne (8) und das Sende-/Empfangsmodul (6) gleichzeitig mit der Zustandsänderung der Verbindungsleitung (10) das obengenannte Funksignal der Elektronik (3) mit ihrer Kennung empfängt, wird diese Kennung in der Elektronik (4) oder im Sende-/Empfangsmodul (6) abgespeichert. Dies hat zur Folge, daß die Elektronik (4) oder das Sende-/Empfangsmodul (6) künftig nur noch auf solche Funksignale reagiert, bei denen die obengenannte Kennung vorgeschaltet ist. Dasselbe gilt entsprechend für die Elektronik (3) bzw. das Sende-/Empfangsmodul (5) bei Sendungen der Elektronik (4) im Anhänger (2).

Durch die in oben beschriebener Weise vorgeschaltete Kennung reagieren jetzt nur noch die zusammengekuppelten Fahrzeugteile (1, 2) auf gegenseitige Funksignale.

Die gleichen Funksignale werden zwar von anderen, in der Nähe befindlichen Fahrzeugen, welche ebenfalls mit Sende-/Empfangsmodulen ausgerüstet sind, ebenfalls empfangen. Eine Reaktion erfolgt hier jedoch nicht, weil die Kennung (Seriennummer der Zugfahrzeug-Elektronik) in diesen Fällen nicht zutrifft.

Beim Abkoppeln des Anhängers (2) vom Zugfahrzeug (1) wird die gespeicherte Kennung des Sende-/Empfangsmoduls (6) des Anhängers (2) vorteilhaft wieder gelöscht. Falls der Anhänger (2) später an ein anderes Zugfahrzeug angehängt wird, kann dann eine neue Kennung in seine Elektronik (4) oder in sein Sende-/Empfangsmodul (6) eingeschrieben werden.

Das in dem Nebenanspruch 2 angegebenen Verfahren unterscheidet sich von dem nach dem Hauptanspruch 1 dadurch, daß das Signal der Elektronik (3) mit ihrer Kennung nicht sofort beim Fahrzeugstart ausgesendet wird, sondern daß das Bremspedal oder der Fahrtrichtungsanzeiger sensiert werden, und bei jeder Betätigung der Bremse und/oder der Fahrtrichtungsanzeiger ein Funksignal über das Sende-/Empfangsmodul (5) und die Antenne (7) mit der Kennung der Elektronik (3) ausgesendet wird. Nur das Sende-/Empfangsmodul (6) des Anhängers (2), welches daraufhin gleichzeitig das Funksignal mit der Kennung sowie die Zustandsänderung auf der Verbindungsleitung (10) empfängt, speichert daraufhin die vom Sende-/Empfangsmodul (5) ausgesendete Kennung der Elektronik (3) des Zugfahrzeugs ab. Zum weiteren Datenaustausch senden die Sende-/Empfangsmodule (5, 6) ihre jeweiligen Nachrichten mit vorgeschalteter Kennung. Somit ist ebenfalls sichergestellt, daß nur die angekoppelten Fahrzeugteile (1, 2) auf diese Nachrichten reagieren, nicht aber weitere, in der Nähe befindliche Fahrzeuge.

Das Verfahren nach Patentanspruch 1 hat den Vorteil, daß sofort nach Fahrzeugstart die Kennung übertragen wird.

Das Verfahren nach Patentanspruch 2 hat den Vorteil, daß auch für den Fall, daß ein Anhänger an ein bereits gestartetes Zugfahrzeug angekoppelt wird, die Kennung bei der nächsten Betätigung der Bremse oder des Blinkers übertragen wird.

Beide Verfahren können natürlich auch kombiniert angewendet werden.

Vorteilhaft ist auch, daß eine Speicherung der Kennung im Sende-/Empfangsmodul (6) oder in der Elektronik (4) des Anhängers erst dann endgültig erfolgt, nachdem mehrere zeitgleiche Sendungen der gefunkten Kennung und der geschalteten Zustandsänderung auf der Verbindungsleitung (10) empfangen wurden.

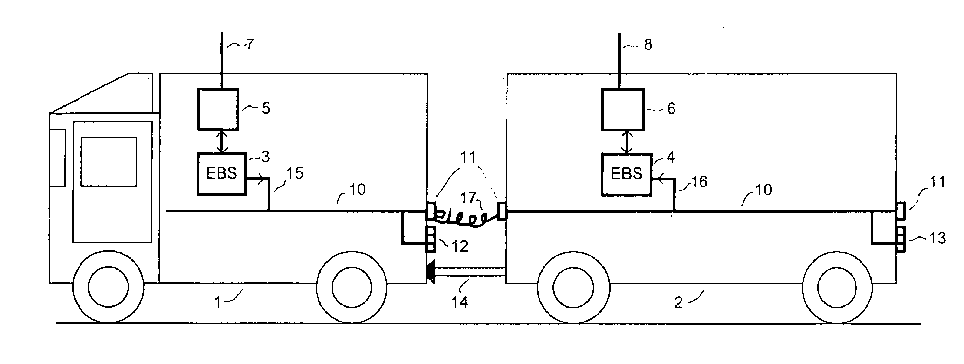

## Patentansprüche

1. Verfahren zum Datenaustausch zwischen einem Zugfahrzeug (1) und einem oder mehreren Anhängern (2), insbesondere für Nutzfahrzeuge, wobei das Zugfahrzeug (1) und der Anhänger (2) mindestens über eine Verbindungsleitung (10) elektrisch miteinander verbunden sind, und wobei sowohl das Zugfahrzeug (1) als auch der Anhänger (2) je eine Elektronik (3, 4) zur Steuerung von Fahrzeugfunktionen enthält, **gekennzeichnet durch** folgende Merkmale:
a) das Zugfahrzeug (1) und der Anhänger (2) weisen je ein Sende-/Empfangsmodul (5, 6) zur drahtlosen Kommunikation auf.
b) die Elektroniken (3, 4) und/oder die Sende-/Empfangsmodule (5, 6) sind über Leitungen (15, 16) mit der Verbindungsleitung (10) verbunden.
c) die Elektroniken (3, 4) und/oder die Sende-/Empfangsmodule (5, 6) enthalten eine Einrichtung, mit der eine Aktivierung/Deaktivierung der Verbindungsleitung (10) erkannt werden kann.
d) bei Inbetriebnahme des Zugfahrzeugs (1) sendet das Sende-/Empfangsmodul (5) des Zugfahrzeugs ein Funksignal mit einer Kennung aus.
e) gleichzeitig wird der elektrische Zustand der Verbindungsleitung (10) kurzzeitig geändert.
f) nur diejenigen Sende-/Empfangsmodule (6), welche gleichzeitig das Funksignal des Moduls (5) mit der Kennung der Elektronik (3) sowie die Zustandsänderung auf der Verbindungsleitung (10) empfangen, speichern die vom Sende-/Empfangsmodul (5) ausgesendete Kennung der Elektronik (3).
g) zum weiteren Datenaustausch sendet das Sende-/Empfangsmodul (5, 6) seine jeweilige Nachricht mit vorgeschalteter Kennung.
h) nur diejenigen Sende-/Empfangsmodule (5, 6), welche die gleiche Kennung aufweisen, leiten die empfangene Nachricht an die zugehörige Elektronik (3, 4) weiter.

2. Verfahren zum Datenaustausch zwischen einem Zugfahrzeug (1) und einem oder mehreren Anhängern (2), insbesondere für Nutzfahrzeuge, wobei das Zugfahrzeug (1) und der Anhänger (2) mindestens über eine Verbindungsleitung (10) elektrisch miteinander verbunden sind, und wobei sowohl das Zugfahrzeug (1) als auch der Anhänger (2) je eine Elektronik (3, 4) zur Steuerung von Fahrzeugfunktionen enthält, **gekennzeichnet durch** folgende Merkmale:
a) das Zugfahrzeug (1) und der Anhänger (2) weisen je ein Sende-/Empfangsmodul (5, 6) zur drahtlosen Kommunikation auf.
b) die Elektroniken (3, 4) und/oder die Sende-/Empfangsmodule (5, 6) sind über eine Leitung (15, 16) mit der Verbindungsleitung (10) verbunden.
c) die Elektroniken (3, 4) und/oder die Sende-/Empfangsmodule (5, 6) enthalten eine Einrichtung, mit der eine Aktivierung/Deaktivierung der Verbindungsleitung (10) erkannt werden kann.
d) während des Fahrbetriebs von Zugfahrzeug (1) und Anhänger (2) sendet das Sende-/Empfangsmodul (5) des Zugfahrzeugs (1) bei jeder **durch** Brems- oder Blinkerbetätigung verursachten Zustandsänderung der Verbindungsleitung (10) gleichzeitig ein Funksignal mit einer Kennung aus.
e) nur diejenigen Sende-/Empfangsmodule (6), welche gleichzeitig das Funksignal mit der Kennung sowie die Zustandsänderung auf ihrer Verbindungsleitung (10) empfangen, speichern die vom Sende-/Empfangsmodul (5) ausgesendete Kennung der Elektronik (3).
f) zum weiteren Datenaustausch senden die Sende-/Empfangsmodule (5, 6) ihre jeweiligen Nachrichten mit vorgeschalteter Kennung.
g) nur diejenigen Sende-/Empfangsmodule (5, 6), welche die gleiche Kennung aufweisen, leiten die empfangene Nachricht an die zugehörige Elektronik (3, 4) weiter.

3. Verfahren nach Anspruch 1 oder 2, **dadurch gekennzeichnet, daß** als Kennung ein charakteristisches Merkmal der sendenden Elektronik (3) benutzt wird.

4. Verfahren nach Anspruch 3, **dadurch gekennzeichnet, daß** als Kennung die Seriennummer der Elektronik (3) im Zugfahrzeug (1) verwendet wird.

5. Verfahren nach einem oder mehreren der Ansprüche 1 bis 4, **dadurch gekennzeichnet, daß** als Verbindungsleitung (10) die Bremslichtleitung oder die Blinklichtleitung benutzt wird.

6. Verfahren nach Anspruch 5, **dadurch gekennzeichnet, daß** als Signal auf der Verbindungsleitung (10) die aktuellen Signale für die Bremslichter und/oder Fahrtrichtungsanzeiger (12, 13) kurzzeitig geändert werden.

7. Verfahren nach Anspruch 6, **dadurch gekennzeichnet, daß** die Änderungen so kurz sind, daß sie von außen nicht sichtbar sind.

8. Verfahren nach einem oder mehreren der Ansprüche 1 bis 7, **dadurch gekennzeichnet, daß** als Sendefrequenz zwischen den Sende-/Empfangsmodulen (5, 6) die für Türschließsysteme freigegebene Frequenz verwendet wird.

9. Verfahren nach einem oder mehreren der Ansprüche 1 bis 8, **dadurch gekennzeichnet, daß** beim Abkoppeln des Anhängers (2) vom Zugfahrzeug (1) die Kennung des Sende-/Empfangsmoduls (6) des Anhängers (2) wieder gelöscht wird.

10. Verfahren nach einem oder mehreren der Ansprüche 1 bis 9, **dadurch gekennzeichnet, daß** die Speicherung der Kennung in den Sende-/Empfangsmodulen (6) erst erfolgt, nachdem mehrere zeitgleiche Sendungen von Funksignalen und Zustandsänderungen der Verbindungsleitung (10) empfangen wurden.
